(19) Europäisches Patentamt European Patent Office Office européen des brevets

(11) **EP 3 016 277 B1**

(12) **FASCICULE DE BREVET EUROPEEN**

(45) Date de publication et mention de la délivrance du brevet:
**29.08.2018  Bulletin 2018/35**

(51) Int Cl.:
***H02S 50/10*** *(2014.01)*

(21) Numéro de dépôt: **15192383.6**

(22) Date de dépôt: **30.10.2015**

(54) **PROCÉDÉ DE DIAGNOSTIC D'UN SYSTÈME PHOTOVOLTAÏQUE**

DIAGNOSEVERFAHREN EINES FOTOVOLTAIKSYSTEMS

METHOD FOR DIAGNOSING A PHOTOVOLTAIC SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.11.2014  FR 1460556**

(43) Date de publication de la demande:
**04.05.2016  Bulletin 2016/18**

(73) Titulaire: **COMMISSARIAT À L'ÉNERGIE ATOMIQUE ET AUX ÉNERGIES ALTERNATIVES 75015 Paris (FR)**

(72) Inventeurs:
• **PICHENOT, Grégoire 73290 LA MOTTE-SERVOLEX (FR)**
• **KHALED, Imene 73000 CHAMBERY (FR)**

(74) Mandataire: **Novaimo ActiTech 8 60 avenue Marie Curie Archamps Technopole 74166 Saint Julien-en-Genevois Cedex (FR)**

(56) Documents cités:
WO-A1-2013/170422      DE-A1-102012 102 932
US-A1- 2010 250 018      US-A1- 2013 307 556

**Description**

L'invention concerne un procédé de diagnostic d'un système photovoltaïque ainsi qu'un système photovoltaïque mettant en oeuvre un tel procédé.

Les systèmes de production d'énergie évoluent et intègrent de plus en plus de sources de production d'énergie renouvelable, et notamment des systèmes photovoltaïques. Pour assurer une optimisation de ces systèmes photovoltaïques, plusieurs méthodes existent pour assurer leur diagnostic afin de détecter des éventuelles anomalies et programmer les réparations adéquates. Les documents DE10 2012 102 932A et US2010/250018A décrivent des procédés de diagnostic d'un système photovoltaïque. Une première méthode repose sur l'utilisation d'un ou plusieurs capteur(s) d'irradiance, afin de mesurer l'énergie solaire réelle reçue, d'en déduire la production théorique des modules photovoltaïques du système, puis de comparer la production réelle constatée avec cette production théorique. L'inconvénient de cette méthode est qu'elle induit un coût important puisqu'elle nécessite des capteurs d'irradiance. De plus, il est nécessaire d'avoir un capteur d'irradiance de même orientation que chaque module photovoltaïque à diagnostiquer, ou de faire des calculs de transposition.

Une seconde méthode repose sur un apprentissage du fonctionnement du système photovoltaïque. A partir de mesures de productions d'énergie passées, il est possible d'en déduire un modèle de fonctionnement du système photovoltaïque, qui sert de référence pour détecter ou non une anomalie de fonctionnement. L'inconvénient de cette méthode est qu'elle nécessite la mémorisation d'un nombre important de mesures passées pour être pertinente. Elle est de plus approximative puisque le modèle obtenu par des mesures passées ne permet pas d'atteindre une grande précision du fonctionnement à un instant présent.

Enfin, ces modèles existants nécessitent la prise en compte de données météorologiques pour générer des données de référence de futures productions, selon des calculs couteux et complexes.

Ainsi, un objet général de l'invention est de proposer une solution améliorée pour le diagnostic d'un système photovoltaïque.

Plus précisément, un objet de l'invention est de proposer une solution adaptée à un système photovoltaïque complexe comprenant une multitude de modules photovoltaïques, et permettant une détection simple et performante d'une défaillance dudit système photovoltaïque.

A cet effet, l'invention repose sur un procédé de diagnostic d'un système photovoltaïque comprenant au moins deux sous-champs photovoltaïques comprenant des modules photovoltaïques, les deux sous-champs photovoltaïques présentant une orientation et/ou une inclinaison différentes, et chaque sous-champ photovoltaïque étant associé à au moins un capteur de mesure d'une grandeur électrique caractéristique de son fonctionnement, caractérisé en ce qu'il comprend les étapes suivantes :

- mesures d'au moins une grandeur électrique par chaque capteur à plusieurs instants d'une période considérée ;
- calcul de valeurs de référence par la transposition des mesures d'une grandeur électrique caractéristiques du fonctionnement d'un sous-champ photovoltaïque de référence, la transposition générant une estimation des valeurs de la grandeur électrique qui seraient mesurées si ledit sous-champ photovoltaïque de référence présentait la même orientation et/ou inclinaison qu'au moins un autre sous-champ photovoltaïque du système photovoltaïque ;
- comparaison des mesures d'une grandeur électrique caractéristique associées à ce au moins un autre sous-champ photovoltaïque avec les valeurs de référence sur une durée choisie pour en déduire ou non une défaillance du système photovoltaïque sur ladite durée.

L'étape de calcul de valeurs de référence peut comprendre la mise en oeuvre de sous-étapes de calcul par l'intermédiaire d'un, ou deux, ou trois, ou plus de trois modèles de transposition des mesures de la grandeur électrique caractéristique du fonctionnement dudit sous-champ, et en ce que ces modèles s'il y en a deux ou plus mis en oeuvre sont adaptés à des situations de temps clair ou couvert et/ou de conditions différentes d'irradiance.

L'étape de calcul de valeurs de référence peut comprendre la mise en oeuvre des sous-étapes suivantes :

- calcul de plusieurs valeurs de référence intermédiaires par plusieurs modèles de transposition des mesures de la grandeur électrique caractéristique du fonctionnement dudit sous-champ;
- choix du modèle qui permet d'obtenir les valeurs de référence les plus proches des mesures du au moins un autre sous-champ photovoltaïque.

L'étape de calcul de valeurs de référence peut comprendre la mise en oeuvre de tout ou partie des sous-étapes suivantes :

- calcul de premières valeurs de référence intermédiaires par un premier modèle de transposition, adapté dans le cas d'une hypothèse de temps clair, et notamment comprenant un calcul de correction de l'angle d'incidence du rayonnement solaire ;

- calcul de secondes valeurs de référence intermédiaires par un second modèle de transposition, adapté dans le cas d'une hypothèse où l'irradiance est dominée par la composante solaire directe, et notamment comprenant un calcul de correction de l'angle d'incidence du rayonnement solaire ;
- calcul de troisièmes valeurs de référence intermédiaires par un troisième modèle de transposition, adapté dans le cas d'une hypothèse de temps couvert avec diffusion isotrope du rayonnement solaire, sans correction de l'angle d'incidence du rayonnement solaire.

La sous-étape de choix du modèle peut comprendre l'analyse statistique de distributions caractéristiques de l'écart entre chaque série de valeurs de référence intermédiaires déduites des mesures du sous-champ photovoltaïque de référence et les mesures d'une grandeur électrique caractéristique associées audit au moins un autre sous-champ photovoltaïque pour choisir comme valeurs de référence la série de valeurs de référence intermédiaires de plus faible écart.

Le procédé de diagnostic peut comprendre une étape de traitement statistique permettant d'écarter les mesures et/ou valeurs de référence isolées et éloignées correspondant probablement à des erreurs de mesures, en prenant en compte l'écart type et/ou la valeur moyenne.

L'étape de comparaison des mesures de grandeur électrique avec les valeurs de référence peut comprendre la comparaison selon une analyse statistique des écarts entre lesdites mesures de grandeur électrique et les valeurs de référence, prenant en compte l'écart type et/ou la valeur moyenne.

La grandeur électrique mesurée peut être la puissance produite à un instant donné, et/ou l'énergie produite à un instant donné depuis un instant initial prédéfini, et/ou peut comprendre la mesure de la tension et/ou du courant aux bornes du sous-champ.

L'invention porte aussi sur un système photovoltaïque, caractérisé en ce qu'il comprend au moins deux sous-champs photovoltaïques comprenant des modules photovoltaïques, les deux sous-champs photovoltaïques présentant une orientation et/ou une inclinaison différentes, et chaque sous-champ photovoltaïque étant associé à au moins un capteur de mesure d'une grandeur électrique caractéristique de son fonctionnement, caractérisé en ce qu'il comprend une unité de gestion qui comprend des moyens logiciels qui mettent en oeuvre le procédé de diagnostic du système photovoltaïque tel que décrit précédemment.

Le capteur de mesure d'une grandeur électrique de chaque sous-champ photovoltaïque peut être intégré dans un onduleur associé à chacun des sous-champs photovoltaïques.

Les deux sous-champs photovoltaïques peuvent être disposés sur deux pans d'un même toit.

L'invention porte aussi sur un support d'enregistrement de données lisible par un calculateur sur lequel est enregistré un programme d'ordinateur comprenant des moyens logiciels de mise en oeuvre des étapes du procédé de diagnostic tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente un système photovoltaïque selon un mode de réalisation de l'invention.

La figure 2 montre une autre représentation du système photovoltaïque selon le mode de réalisation de l'invention.

La figure 3 représente un organigramme du procédé de diagnostic du système photovoltaïque selon le mode de réalisation de l'invention.

La figure 4 représente des courbes illustrant un exemple de mise en oeuvre du procédé de diagnostic selon le mode de réalisation de l'invention.

La figure 5 représente un organigramme de quelques étapes du procédé de diagnostic du système photovoltaïque selon le mode de réalisation de l'invention.

Les figures 6 et 7 représentent des distributions de respectivement la puissance et l'énergie produite du système photovoltaïque selon un certain scénario et la mise en oeuvre du procédé de diagnostic selon le mode de réalisation de l'invention.

La figure 8 représente des courbes obtenues par la mise en oeuvre du procédé de diagnostic selon le mode de réalisation de l'invention selon un scénario avec anomalie.

La figure 9 concerne une présentation graphique d'analyse de l'énergie produite par le système photovoltaïque selon le mode de réalisation de l'invention sur une longue durée.

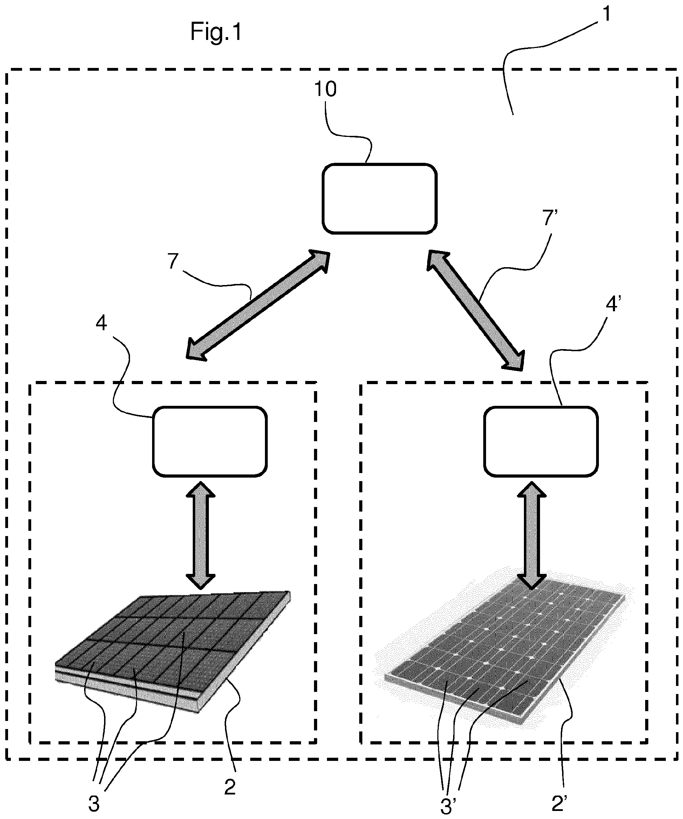

Selon un mode de réalisation de l'invention représenté par la figure 1, un système photovoltaïque 1 comprend les éléments suivants :

- Un champ photovoltaïque comprenant deux sous-champs photovoltaïques 2, 2' d'orientation et/ou inclinaison différente. Chaque sous-champ 2, 2' comprend plusieurs modules photovoltaïques 3, 3' de génération d'énergie électrique. A titre d'exemple, chaque sous-champ photovoltaïque 2, 2' peut recouvrir un pan d'une toiture d'un bâtiment, le système photovoltaïque comprenant alors deux sous-champs photovoltaïques d'orientation opposée ;
- Des capteurs 4, 4' de mesure d'une (ou plusieurs) grandeur électrique caractéristique du fonctionnement de modules photovoltaïques 3, 3', et plus généralement de chaque sous-champ photovoltaïque 2, 2', chaque capteur 4, 4' étant associé à un sous-champ photovoltaïque 2, 2' ;
- Des dispositifs de communication 7, 7' entre les capteurs 4, 4' et une unité de gestion 10 du système photovoltaïque, pour transmettre périodiquement ou sur ordre de l'unité de gestion 10 les mesures effectuées par les capteurs 4, 4'.

L'unité de gestion 10 se présente sous la forme d'une entité de calcul, par exemple comprenant tout calculateur avec un support logiciel et au moins une mémoire électronique, pour mettre en oeuvre les fonctionnalités qui vont être décrites ci-après du procédé de diagnostic du système photovoltaïque 1. Cette unité de gestion 10 peut être physiquement à proximité du champ photovoltaïque ou à distance. Elle peut se présenter sous la forme d'une seule entité physique ou de plusieurs entités, par exemple par la disposition d'une sous-unité par sous-champ photovoltaïque.

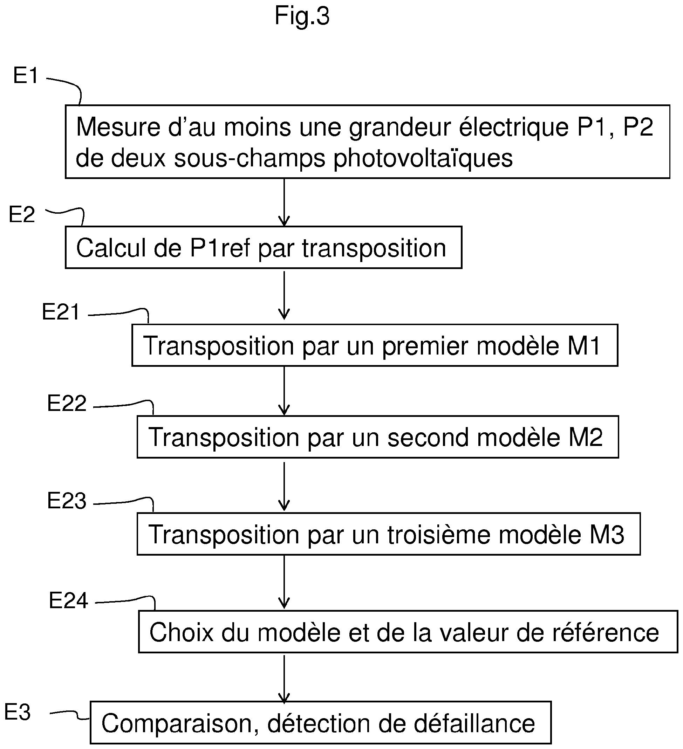

L'unité de gestion 10 met en oeuvre le procédé de diagnostic, représenté schématiquement par l'organigramme de la figure 3, et forme ainsi un dispositif de diagnostic du système photovoltaïque. Ce procédé repose sur la transposition d'une grandeur électrique mesurée sur un des deux sous-champs photovoltaïques, et caractéristique du fonctionnement dudit sous-champ photovoltaïque, par exemple le second sous-champ photovoltaïque 2' selon ce mode de réalisation, de manière à la rendre comparable avec la grandeur électrique mesurée sur un autre sous-champ photovoltaïque, par exemple le premier sous-champ photovoltaïque 2 selon ce mode de réalisation. La description ci-dessous va détailler un mode de réalisation de l'invention mettant en oeuvre ce principe.

Le procédé de diagnostic comprend une étape E1 de réception périodique des données numériques des mesures d'une grandeur électrique, que nous appellerons plus simplement « mesures », transmises par tout ou partie des capteurs 4, 4' du système photovoltaïque 1.

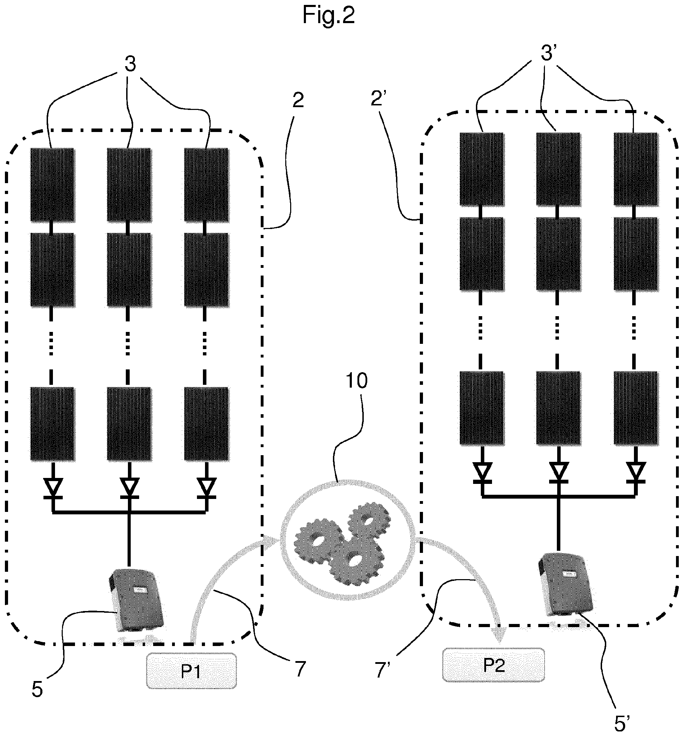

Avantageusement, cette grandeur électrique mesurée, caractéristique du fonctionnement d'un sous-champ photovoltaïque, est la puissance électrique fournie par chaque sous-champ photovoltaïque. En variante, cette grandeur électrique, caractéristique du fonctionnement d'un sous-champ photovoltaïque, pourrait être la tension, le courant de sortie, continu ou alternatif, aux bornes de chaque sous-champ photovoltaïque, et/ou l'énergie produite cumulée depuis un instant initial prédéfini. Ces mesures transmises par les différents capteurs sont mémorisées dans une mémoire électronique de l'unité de gestion 10. En remarque, il est possible d'utiliser un ou plusieurs capteur(s) 4, 4' par sous-champs photovoltaïque. Par exemple, ces mesures P1, P2 peuvent être réalisées au niveau d'un onduleur 5, 5' associé au sous-champ photovoltaïque 2, 2' concerné, comme plus particulièrement représenté sur la figure 2. Chaque ensemble de modules photovoltaïques 3, 3' associés en série, de chaque sous-champ photovoltaïque 2, 2', parfois appelé chaines ou par la dénomination anglaise « string », produit un courant continu qui est transmis à l'onduleur 5, 5' du sous-champ photovoltaïque 2, 2' concerné, qui va transformer ce courant continu en courant alternatif et permettre la compatibilité et la connexion du système photovoltaïque 1 avec un secteur électrique plus vaste conventionnel. Dans cette configuration, la grandeur électrique considérée peut être obtenue à partir d'une mesure au niveau de l'onduleur. L'onduleur remplit ainsi aussi la fonction de capteur. Si cette grandeur est la puissance, il existe par exemple trois méthodes possibles pour la mesurer :

- On peut considérer la mesure de puissance continue disponible directement au niveau de l'onduleur ; et/ou
- On peut déduire la puissance par le produit du courant continu et de la tension continue, ces deux grandeurs électriques étant mesurées au niveau de l'onduleur ; et/ou
- On peut déduire la puissance par le produit du courant et de la tension, le courant étant mesuré au niveau de la (ou des) chaîne de modules photovoltaïques (et non plus au niveau de l'onduleur comme au point précédent).

Ces trois méthodes potentielles permettent de choisir la mesure la plus performante, par exemple en observant successivement l'écart entre chacune des mesures selon les trois approches ci-dessus et une valeur de puissance de référence sur une certaine durée, et en choisissant l'approche de mesure qui permet d'atteindre l'écart type minimum de la distribution de ces écarts sur cette durée. En variante, le choix peut être simplement dicté par la précision intrinsèque des capteurs utilisés selon les trois méthodes.

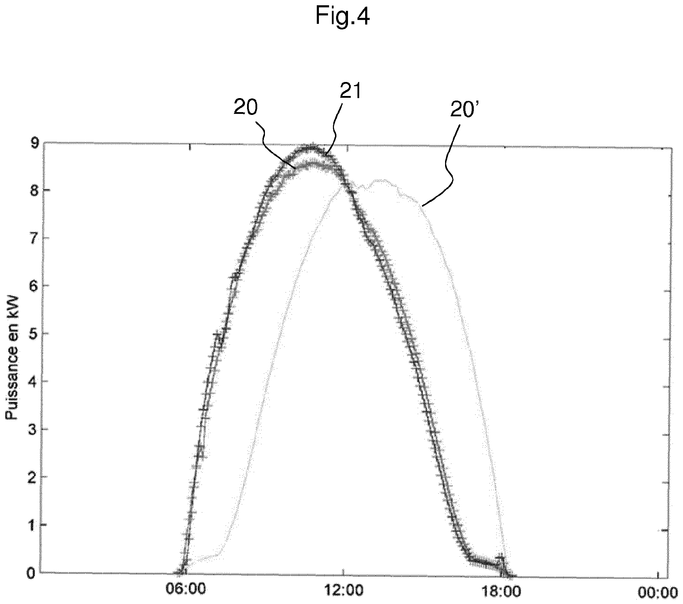

La figure 4 illustre à titre d'exemple par les courbes 20, 20' les données numériques de mesures mémorisées par l'unité de gestion 10 pour respectivement les deux sous-champs 2, 2' sur une durée d'une journée selon un scénario. Ces courbes 20, 20' représentent l'évolution en fonction du temps des mesures de puissance pour les deux sous-champs photovoltaïques 2, 2' sur la durée d'une journée. En remarque, le mode de réalisation choisit la journée comme sous-période de traitement : naturellement, la même approche pourrait fonctionner avec une période de durée différente. La courbe 21 représente les données obtenues par la transposition des mesures du second sous-champ 2', de sorte à être comparables aux mesures du premier sous-champ photovoltaïque 2, selon une étape de transposition qui va être plus précisément décrite ci-dessous. En remarque, sur ce scénario représenté, les courbes 20, 21 obtenues sont proches, ce qui correspond à un fonctionnement a priori normal des sous-champs photovoltaïques 2, 2' observés.

Comme mentionné précédemment, le procédé met en oeuvre une étape de calcul E2 de valeurs de référence P1ref par la transposition des mesures P2 du second sous-champ photovoltaïque. Cette transposition a pour objectif d'estimer à partir des mesures P2 réalisées sur le second sous-champ photovoltaïque 2' les mesures P1ref qui seraient obtenues si ce second sous-champ photovoltaïque présentait la même orientation et la même inclinaison que le premier sous-champ photovoltaïque. La transposition des mesures d'un premier des sous-champs photovoltaïques, jouant le rôle de sous-champ photovoltaïque de référence, permet ainsi d'estimer la valeur de la grandeur électrique mesurée qui serait obtenue si ledit sous-champ photovoltaïque de référence présentait la même orientation et/ou inclinaison, ou plus généralement la même architecture et configuration géométrique, qu'au moins un autre sous-champ photovoltaïque.

Selon le mode de réalisation, cette étape de calcul E2 comprend trois sous-étapes E21, E22, E23 mettant chacune en oeuvre des modèles de calcul distincts et complémentaires pour une telle transposition, respectivement M1, M2, M3, puis une sous-étape de choix E24 du modèle le plus pertinent sur une certaine période. Chaque modèle permet d'obtenir des valeurs de référence intermédiaires, la sous-étape E24 permettant ensuite de retenir comme valeurs de référence les valeurs les plus pertinentes parmi les différentes valeurs de référence intermédiaires.

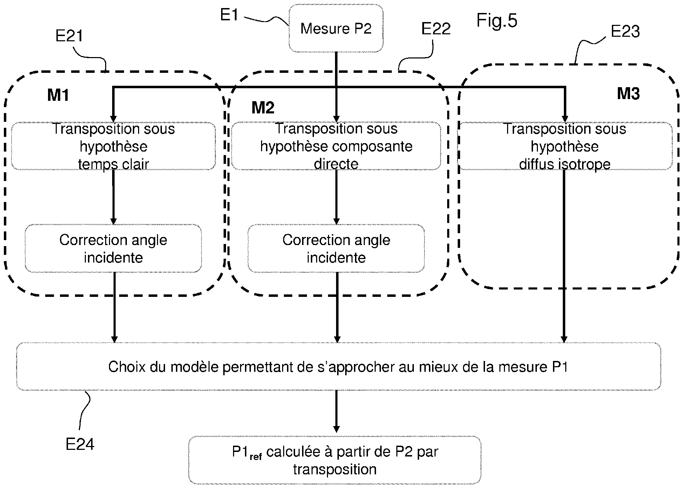

Cette étape de calcul E2 est détaillée sur la figure 5. Dans ce mode de réalisation, trois modèles M1, M2, M3 sont utilisés, chacun adapté à une condition météorologique particulière. La première sous-étape E21 met donc en oeuvre un premier modèle M1 de transposition, particulièrement adapté au cas d'une hypothèse de temps clair. La seconde sous-étape E22 met en oeuvre un second modèle M2 de transposition, particulièrement adapté au cas où l'irradiance est dominée par une composante solaire directe. Ces deux premiers modèles M1, M2 comprennent un calcul de correction de l'angle d'incidence du rayonnement solaire. La troisième sous-étape E23 met en oeuvre un troisième modèle M3 de transposition, particulièrement adapté dans le cas d'une hypothèse de temps couvert avec diffusion isotrope du rayonnement solaire.

A titre d'exemple, le modèle M1 peut permettre de calculer la valeur de référence P1ref par la transposition des mesures P2 du second sous-champ photovoltaïque par le calcul suivant :

$$P1ref = P2*[ (f1*Binc\_cl1+Dinc\_cl1)/(f2*Binc\_cl2+Dinc\_cl2) ]$$

où

Binc_cl1 représente la composante directe de l'irradiance solaire issue d'un modèle de temps clair pour le premier sous-champ,
Dinc_cl1 représente la composante diffuse de l'irradiance solaire issue d'un modèle de temps clair pour le premier sous-champ,
Binc_cl2 représente la composante directe de l'irradiance solaire issue d'un modèle de temps clair pour le second sous-champ,
Dinc_cl2 représente la composante diffuse de l'irradiance solaire issue d'un modèle de temps clair pour le second sous-champ,

et avec

$$f1 = 1-b0*[1/cos(Theta1)-1]$$

$$f2 = 1-b0*[1/cos(Theta2)-1]$$

où

Theta1 est l'angle d'incidence du rayonnement solaire direct dans le plan du premier sous-champ, et

Theta2 est l'angle d'incidence du rayonnement solaire direct dans le plan du second sous-champ, et
b0 est une constante, qui peut prendre la valeur 0.05.

Le modèle M2 peut permettre de calculer la valeur de référence P1 ref par la transposition des mesures P2 du second sous-champ photovoltaïque par le calcul suivant :

$$P1ref = P2*[ (f1*Binc\_cl1)/(f2*Binc\_cl2) ]$$

Le modèle M3 peut permettre de calculer la valeur de référence P1 ref par la transposition des mesures P2 du second sous-champ photovoltaïque par le calcul suivant :

$$Pref1 = P2*R3$$

avec :

$$R3 = [1+cos(Incl1)+Alb1*(1-cos(Incl1))]/[1+cos(Incl2)+Alb2*(1-cos(Incl2))]$$

où

Incl1 est l'angle d'inclinaison du plan du premier sous-champ,
Incl2 est l'angle d'inclinaison du plan du second sous-champ,
Alb1 est l'Albedo associé au premier sous-champ, et
Alb2 est l'Albedo associé au second sous-champ.
Usuellement, on considère Alb1 = Alb2 = 0.2

Naturellement, d'autres modes de réalisation peuvent être obtenus à partir d'autres modèles, et en utilisant un autre nombre de modèles, notamment au moins deux, par exemple les modèles M1 et M3 ci-dessus. D'autres modèles peuvent être utilisés, élaborés à partir de calculs de transposition connus, par exemple utilisant l'enseignement du document Rigollier C., Bauer O., Wald L., intitulé « On the clear sky model of the 4th European Solar Radiation Atlas with respect to the Heliosat method », solar Energy, vol. 68, pp. 33-48, 2000. En remarque, l'invention ne porte pas sur les modèles en tant que tels.

Ensuite, la sous-étape E24 détermine le modèle le plus adapté. Pour cela, les valeurs de référence intermédiaires obtenues par chaque modèle M1, M2, M3 sont comparées aux mesures du premier sous-champ photovoltaïque 2. Pour cela, une analyse statistique de l'écart entre les valeurs de référence intermédiaires et les mesures P1 peut être réalisée. Cette analyse peut permettre de déduire le modèle qui fournit les valeurs de référence intermédiaires P1ref qui s'approchent le plus des mesures P1 sur une certaine période considérée. Cette approche peut être réalisée sur toute sous-période d'une durée choisie : elle permet ainsi sur une période d'une journée de choisir par exemple toutes les 30 minutes le modèle le plus adapté, et de construire la série des valeurs de référence sur la période d'une journée par la réunion des valeurs de référence intermédiaires choisies sur les sous-périodes. Selon une variante, la valeur de référence est choisie à tout instant de mise en oeuvre des sous-étapes E21, E22, E23, c'est-à-dire aussi pour chaque mesure P2, en retenant la valeur la plus proche de la mesure P1 à ce même instant. En remarque, les deux approches précédentes présentent l'avantage de ne pas nécessiter la connaissance de données météorologiques.

Lorsque les valeurs de référence P1ref sont calculées, le procédé met en oeuvre une étape de comparaison E3 qui consiste à comparer les mesures P1 réalisées sur le premier sous-champ photovoltaïque avec les valeurs de référence P1ref, déduites par transposition des mesures P2 réalisées sur le second sous-champ photovoltaïque, sur toute une durée considérée. Selon une première approche simple, toutes les mesures éloignées d'un certain pourcentage prédéfini, par exemple pour un écart supérieur ou égal à 10%, voire supérieur ou égal à 5%, sont considérées comme des anomalies.

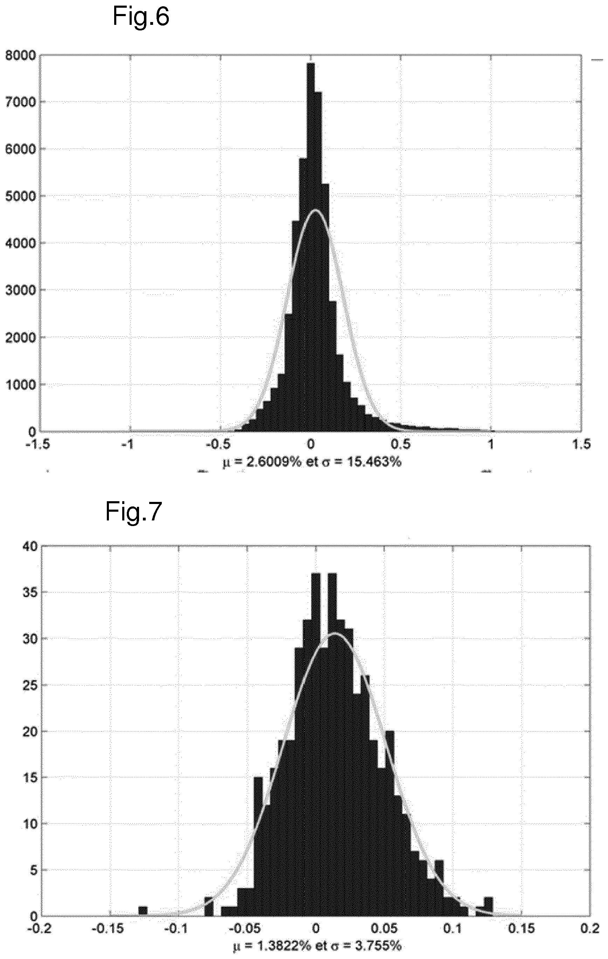

En variante préférée, cette étape de comparaison E3 met en oeuvre une analyse statistique des écarts entre les mesures et les valeurs de référence. Ces écarts peuvent par exemple être considérés par le calcul (P1-P1ref)/P1ref ou par toute grandeur équivalente, formant une distribution de données selon une loi normale, en considérant une période suffisamment longue, par exemple une journée, pour obtenir un nombre important de données, ce qui permet avantageusement de les traiter statistiquement, notamment à partir de l'écart type et/ou de la valeur moyenne. La figure 6 illustre à titre d'exemple une telle répartition statistique de l'écart des puissances sur une année.

Cette configuration permet un traitement avantageux et bien contrôlé et fiable. Si la valeur moyenne de cette distribution s'écarte d'une valeur nulle d'un certain seuil, alors cela signifie qu'il existe un biais dont l'origine peut être liée à des pertes d'énergie au sein de composants du système photovoltaïque. Naturellement, l'écart type permet de caractériser la dispersion de la distribution statistique.

En complément, le procédé selon le mode de réalisation met aussi en oeuvre une étape de calcul de l'énergie produite sur une certaine période, par exemple d'une journée. Si la valeur de référence est la puissance, il est facile d'en déduire une énergie de référence sur une certaine période. En remarque, un facteur β correctif, obtenu par régression linéaire, peut être appliqué sur l'énergie de référence précédemment calculée. Ainsi, le procédé met alors en oeuvre une comparaison de l'énergie E1 produite par le premier sous-champ photovoltaïque avec l'énergie de référence E1ref, par exemple par l'analyse statistique de la grandeur (E1-E1ref)/E1ref, comme illustré par la figure 7.

Les exemples de réalisation, notamment illustrés par les figures 6 et 7, montrent que le procédé permet d'atteindre une précision de l'ordre de 10 à 15% lors de la comparaison des puissances, et une précision de 2 à 4% lors de la comparaison de l'énergie produite sur une journée. Cette dernière grandeur sera donc privilégiée.

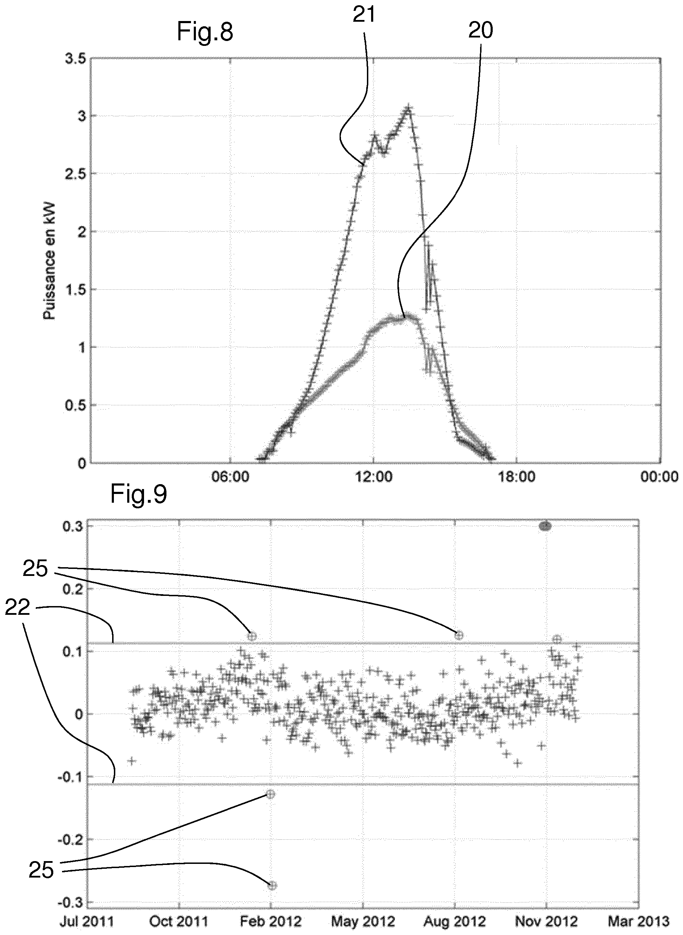

Naturellement, tout écart au-delà d'un certain seuil entre les valeurs de référence P1ref et les mesures à comparer P1, est interprété comme une anomalie du système photovoltaïque, provenant soit du sous-champ photovoltaïque mesuré, soit du sous-champ photovoltaïque de référence ayant servi de base au calcul des valeurs de référence. La figure 8 illustre à titre d'exemple une situation sur une journée dans un scénario d'anomalie, durant laquelle la production mesurée sur le premier sous-champ photovoltaïque 2, représentée par la courbe 20, est fortement inférieure aux valeurs de référence, représentées par la courbe 21. Selon un mode de réalisation, il pourra être conclu à une anomalie de fonctionnement du système photovoltaïque si une telle situation se répète plusieurs jours consécutifs, par exemple au moins trois jours, voire au moins cinq jours.

La figure 9 illustre une autre répartition de la grandeur relative à l'énergie (E1-E1ref)/E1ref en fonction du temps. Ces grandeurs oscillent autour de zéro. Deux droites 22 forment des seuils correspondant à 3σ et -3σ, où σ représente l'écart type de la distribution. Les points 25 hors de ces limitent sont considérés comme étant relatifs à des anomalies de fonctionnement. Dans le scénario illustré par cet exemple, les anomalies correspondent à quelques jours isolés et le système photovoltaïque est considéré comme fonctionnant normalement.

De préférence, les différents capteurs du système photovoltaïque transmettent des mesures aux mêmes instants, selon une même période, pour permettre à un instant donné de comparer les différentes mesures. En variante, ces périodes de mesures pourraient être différentes, et d'autres valeurs intermédiaires pourraient être extrapolées à partir de certaines mesures, et considérées comme des mesures dans la mise en oeuvre du procédé.

D'autre part, le procédé est performant en considérant deux sous-champs photovoltaïques. Dans les modes de réalisation décrits, les deux sous-champs présentent une structure identique, le même nombre de chaines de modules avec le même nombre de modules, ces modules étant identiques : cela peut par exemple être le cas sur des surfaces de couverture identiques, comme deux pans d'un même toit, d'orientation opposée, ou deux ensembles standard d'une centrale photovoltaïque. En variante, les deux sous-champs photovoltaïques pourraient présenter une architecture différente et l'étape de calcul E2 comprendrait alors un coefficient correcteur pour tenir compte de cette différence et la compenser. A titre d'exemple, des modules peuvent être associés à des puissances crêtes différentes, et le procédé met alors en oeuvre une étape préalable de normalisation des mesures en les divisant par leur puissance crête respective. Selon une autre variante, il pourrait y avoir plus de deux sous-champs photovoltaïques, au moins un servant de référence pour au moins un autre.

En variante, le même principe pourrait être mis en oeuvre non plus en considérant deux sous-champs d'un même système photovoltaïque, par exemple une centrale photovoltaïque, mais en considérant deux champs ou sous-champs photovoltaïques de deux systèmes photovoltaïques distincts, par exemple deux centrales photovoltaïques distinctes, mais à proximité géographique l'un de l'autre pour que le rayonnement solaire reçu par les deux ensembles comparés soit relativement similaire.

Il apparaît ainsi que le procédé est simple à mettre en oeuvre, ne nécessite pas des ressources intenses, mais peut être mis en oeuvre avec une unité de gestion simple tout en obtenant des temps de calcul très faibles, ce qui peut permettre une mise en oeuvre très fréquente et/ou à partir d'un grand nombre de mesures, mesurées selon une fréquence élevée.

Le procédé a été décrit comme permettant une analyse a posteriori, en analysant par exemple toutes les mesures obtenues sur une journée passée pour en déduire un diagnostic du fonctionnement d'un système photovoltaïque. Comme le procédé est simple et rapide à mettre en oeuvre, il peut être exécuté de nombreuses fois, ce qui permet d'obtenir un diagnostic en quasi temps réel, pour engager des actions rectificatives très rapidement si nécessaire et maintenir la production d'énergie à son maximum à tout moment.

Naturellement, en cas de détection d'une anomalie, le procédé peut déclencher la transmission d'une alerte vers un opérateur, par toute interface homme machine.

**Revendications**

1.  Procédé de diagnostic d'un système photovoltaïque (1) comprenant au moins deux sous-champs photovoltaïques (2, 2') comprenant des modules photovoltaïques (3, 3'), les deux sous-champs photovoltaïques (2, 2') présentant une orientation et/ou une inclinaison différentes, et chaque sous-champ photovoltaïque (2, 2') étant associé à au moins un capteur (4, 4') de mesure d'une grandeur électrique caractéristique de son fonctionnement, **caractérisé en ce qu'**il comprend les étapes suivantes :

    (E1) - mesures d'au moins une grandeur électrique par chaque capteur (4, 4') à plusieurs instants d'une période considérée ;
    (E2) - calcul de valeurs de référence par la transposition des mesures d'une grandeur électrique caractéristiques du fonctionnement d'un sous-champ photovoltaïque de référence, la transposition générant une estimation des valeurs de la grandeur électrique qui seraient mesurées si ledit sous-champ photovoltaïque de référence présentait la même orientation et/ou inclinaison qu'au moins un autre sous-champ photovoltaïque du système photovoltaïque ;
    (E3) - comparaison des mesures d'une grandeur électrique caractéristique associées à ce au moins un autre sous-champ photovoltaïque avec les valeurs de référence sur une durée choisie pour en déduire ou non une défaillance du système photovoltaïque sur ladite durée.

2.  Procédé de diagnostic d'un système photovoltaïque (1) selon la revendication précédente, **caractérisé en ce que** l'étape de calcul (E2) de valeurs de référence comprend la mise en oeuvre de sous-étapes de calcul par l'intermédiaire d'un, ou deux, ou trois, ou plus de trois modèles de transposition des mesures de la grandeur électrique caractéristique du fonctionnement dudit sous-champ, et **en ce que** ces modèles s'il y en a deux ou plus mis en oeuvre sont adaptés à des situations de temps clair ou couvert et/ou de conditions différentes d'irradiance.

3.  Procédé de diagnostic d'un système photovoltaïque (1) selon la revendication précédente, **caractérisé en ce que** l'étape de calcul (E2) de valeurs de référence comprend la mise en oeuvre des sous-étapes suivantes :

    - calcul (E21, E22, E23) de plusieurs valeurs de référence intermédiaires par plusieurs modèles (M1, M2, M3) de transposition des mesures de la grandeur électrique caractéristique du fonctionnement dudit sous-champ;
    - choix du modèle (E24) qui permet d'obtenir les valeurs de référence les plus proches des mesures du au moins un autre sous-champ photovoltaïque.

4.  Procédé de diagnostic d'un système photovoltaïque (1) selon la revendication 2 ou 3, **caractérisé en ce que** l'étape de calcul (E2) de valeurs de référence comprend la mise en oeuvre de tout ou partie des sous-étapes suivantes :

    (E21) - calcul de premières valeurs de référence intermédiaires par un premier modèle (M1) de transposition, adapté dans le cas d'une hypothèse de temps clair, et notamment comprenant un calcul de correction de l'angle d'incidence du rayonnement solaire ;
    (E22) - calcul de secondes valeurs de référence intermédiaires par un second modèle (M2) de transposition, adapté dans le cas d'une hypothèse où l'irradiance est dominée par la composante solaire directe, et notamment comprenant un calcul de correction de l'angle d'incidence du rayonnement solaire ;
    (E23) - calcul de troisièmes valeurs de référence intermédiaires par un troisième modèle (M3) de transposition, adapté dans le cas d'une hypothèse de temps couvert avec diffusion isotrope du rayonnement solaire, sans correction de l'angle d'incidence du rayonnement solaire.

5.  Procédé de diagnostic d'un système photovoltaïque (1) selon la revendication 3 ou 4, **caractérisé en ce que** la sous-étape de choix du modèle (E24) comprend l'analyse statistique de distributions caractéristiques de l'écart entre chaque série de valeurs de référence intermédiaires déduites des mesures du sous-champ photovoltaïque de référence et les mesures d'une grandeur électrique caractéristique associées audit au moins un autre sous-champ photovoltaïque pour choisir comme valeurs de référence la série de valeurs de référence intermédiaires de plus faible écart.

6.  Procédé de diagnostic d'un système photovoltaïque (1) selon l'une des revendications précédentes, **caractérisé en ce qu'**il comprend une étape de traitement statistique permettant d'écarter les mesures et/ou valeurs de référence isolées et éloignées correspondant probablement à des erreurs de mesures, en prenant en compte l'écart type et/ou la valeur moyenne.

7. Procédé de diagnostic d'un système photovoltaïque (1) selon l'une des revendications précédentes, **caractérisé en ce que** l'étape de comparaison (E3) des mesures de grandeur électrique avec les valeurs de référence comprend la comparaison selon une analyse statistique des écarts entre lesdites mesures de grandeur électrique et les valeurs de référence, prenant en compte l'écart type et/ou la valeur moyenne.

8. Procédé de diagnostic d'un système photovoltaïque (1) selon l'une des revendications précédentes, **caractérisé en ce que** la grandeur électrique mesurée est la puissance produite à un instant donné, et/ou l'énergie produite à un instant donné depuis un instant initial prédéfini, et/ou comprend la mesure de la tension et/ou du courant aux bornes du sous-champ.

9. Système photovoltaïque (1), **caractérisé en ce qu'**il comprend au moins deux sous-champs photovoltaïques (2, 2') comprenant des modules photovoltaïques (3, 3'), les deux sous-champs photovoltaïques (2, 2') présentant une orientation et/ou une inclinaison différentes, et chaque sous-champ photovoltaïque (2, 2') étant associé à au moins un capteur (4, 4') de mesure d'une grandeur électrique caractéristique de son fonctionnement, **caractérisé en ce qu'**il comprend une unité de gestion (10) qui comprend des moyens logiciels qui mettent en oeuvre le procédé de diagnostic du système photovoltaïque (1) selon l'une des revendications précédentes.

10. Système photovoltaïque (1) selon la revendication précédente, **caractérisé en ce que** le capteur (4, 4') de mesure d'une grandeur électrique de chaque sous-champ photovoltaïque (2, 2') est intégré dans un onduleur (5, 5') associé à chacun des sous-champs photovoltaïques.

11. Système photovoltaïque (1) selon la revendication 9 ou 10, **caractérisé en ce que** les deux sous-champs photovoltaïques sont disposés sur deux pans d'un même toit.

12. Support d'enregistrement de données lisible par un calculateur sur lequel est enregistré un programme d'ordinateur comprenant des moyens logiciels de mise en oeuvre des étapes du procédé de diagnostic selon l'une des revendications 1 à 8.

**Patentansprüche**

1. Diagnoseverfahren eines Fotovoltaiksystems (1), umfassend mindestens zwei Fotovoltaik-Unterfelder (2, 2'), umfassend Fotovoltaikmodule (3, 3'), wobei die zwei Fotovoltaik-Unterfelder (2, 2') eine unterschiedliche Ausrichtung und/oder Neigung aufweisen, und wobei jedes Fotovoltaik-Unterfeld (2, 2') mindestens einem Sensor (4, 4') zum Messen einer elektrischen Größe zugeordnet ist, die für seine Funktion charakteristisch ist, **dadurch gekennzeichnet, dass** es die folgenden Schritte umfasst:

(E1) - Messungen mindestens einer elektrischen Größe durch jeden Sensor (4, 4') zu mehreren Zeitpunkten einer betreffenden Periode;
(E2) - Berechnung von Referenzwerten durch die Transposition der Messungen einer für die Funktion eines Fotovoltaik-Referenzunterfeldes charakteristischen elektrischen Größe, wobei die Transposition eine Schätzung der Werte der elektrischen Größe erzeugt, die gemessen würden, wenn das Fotovoltaik-Referenzunterfeld dieselbe Ausrichtung und/oder Neigung wie mindestens ein weiteres Fotovoltaik-Unterfeld des Fotovoltaiksystems aufweisen würde;
(E3) - Vergleich der Messungen einer charakteristischen elektrischen Größe, die diesem mindestens einen weiteren Fotovoltaik-Unterfeld zugeordnet sind, mit den Referenzwerten über eine ausgewählte Dauer, um davon einen Ausfall des Fotovoltaiksystems über die Dauer abzuleiten oder nicht.

2. Diagnoseverfahren eines Fotovoltaiksystems (1) nach dem vorhergehenden Anspruch, **dadurch gekennzeichnet, dass** der Schritt der Berechnung (E2) von Referenzwerten den Einsatz von Berechnungs-Unterschritten mit Hilfe von einem, zwei, drei oder mehr als drei Modellen zur Transposition der Messungen der für die Funktion des Unterfeldes charakteristischen elektrischen Größe umfasst, und dass diese Modelle, wenn zwei oder mehr davon eingesetzt werden, an Situationen von klarem oder bedecktem Wetter und/oder unterschiedlichen Bestrahlungsbedingungen angepasst sind.

3. Diagnoseverfahren eines Fotovoltaiksystems (1) nach dem vorhergehenden Anspruch, **dadurch gekennzeichnet, dass** der Schritt der Berechnung (E2) von Referenzwerten den Einsatz der folgenden Unterschritte umfasst:

- Berechnung (E21, E22, E23) mehrerer Zwischenreferenzwerte durch mehrere Modelle (M1, M2, M3) zur Transposition der Messungen der für die Funktion des Unterfeldes charakteristischen elektrischen Größe;
- Auswahl des Modells (E24), das es ermöglicht, die nächsten Referenzwerte zu den Messungen des mindestens einen weiteren Fotovoltaik-Unterfeldes zu erhalten.

4. Diagnoseverfahren eines Fotovoltaiksystems (1) nach Anspruch 2 oder 3, **dadurch gekennzeichnet, dass** der Schritt der Berechnung (E2) von Referenzwerten den Einsatz der Gesamtheit oder eines Teils der folgenden Unterschritte umfasst:

(E21) - Berechnung erster Zwischenreferenzwerte durch ein erstes Transpositionsmodell (M1), das für den Fall einer Annahme von klarem Wetter angepasst ist, und insbesondere umfassend eine Korrekturberechnung des Einfallswinkels der Sonnenstrahlung;
(E22) - Berechnung zweiter Zwischenreferenzwerte durch ein zweites Transpositionsmodell (M2), das für den Fall einer Annahme, dass die Strahlung durch die direkte Sonnenkomponente dominiert wird, angepasst ist, und insbesondere umfassend eine Korrekturberechnung des Einfallswinkels der Sonnenstrahlung;
(E23) - Berechnung dritter Zwischenreferenzwerte durch ein drittes Transpositionsmodell (M3), das für den Fall einer Annahme von bedecktem Wetter mit isotroper Diffusion der Sonnenstrahlung angepasst ist, ohne Korrektur des Einfallswinkels der Sonnenstrahlung.

5. Diagnoseverfahren eines Fotovoltaiksystems (1) nach Anspruch 3 oder 4, **dadurch gekennzeichnet, dass** der Unterschritt der Auswahl des Modells (E24) die statistische Analyse von charakteristischen Verteilungen des Abstandes zwischen jeder Reihe von Zwischenreferenzwerten, die von den Messungen des Fotovoltaik-Referenzunterfeldes und den Messungen einer charakteristischen elektrischen Größe, die dem mindestens einen weiteren Fotovoltaik-Unterfeld zugeordnet ist, abgeleitet sind, umfasst, um als Referenzwerte die Reihe von Zwischenreferenzwerten mit der geringsten Abweichung zu wählen.

6. Diagnoseverfahren eines Fotovoltaiksystems (1) nach einem der vorhergehenden Ansprüche, **dadurch gekennzeichnet, dass** es einen Schritt der statistischen Verarbeitung umfasst, der es ermöglicht, die isolierten oder entfernten Messungen und/oder Referenzwerte, die wahrscheinlich Messfehlern entsprechen, zu entfernen, wobei typische Abweichung und/oder der Durchschnittswert berücksichtigt werden.

7. Diagnoseverfahren eines Fotovoltaiksystems (1) nach einem der vorhergehenden Ansprüche, **dadurch gekennzeichnet, dass** der Schritt des Vergleichs (E3) der Messungen einer elektrischen Größe mit den Referenzwerten den Vergleich der Abweichungen zwischen den Messungen einer elektrischen Größe und den Referenzwerten nach einer statistischen Analyse umfasst, wobei die typische Abweichung und/oder der Durchschnittswert berücksichtigt werden.

8. Diagnoseverfahren eines Fotovoltaiksystems (1) nach einem der vorhergehenden Ansprüche, **dadurch gekennzeichnet dass** die gemessene elektrische Größe die zu einem gegebenen Zeitpunkt erzeugte Leistung und/oder die zu einem gegebenen Zeitpunkt seit einem vordefinierten Anfangszeitpunkt erzeugte Energie ist, und/oder die Messung der Spannung und/oder des Stroms an den Klemmen des Unterfeldes umfasst.

9. Fotovoltaiksystem (1), **dadurch gekennzeichnet, dass** es mindestens zwei Fotovoltaik-Unterfelder (2, 2'), umfassend Fotovoltaikmodule (3, 3') umfasst, wobei die zwei Fotovoltaik-Unterfelder (2, 2') eine unterschiedliche Ausrichtung und/oder Neigung aufweisen, und wobei jedes Fotovoltaik-Unterfeld (2, 2') mindestens einem Sensor (4, 4') zum Messen einer elektrischen Größe zugeordnet ist, die für seine Funktion charakteristisch ist, **dadurch gekennzeichnet, dass** es eine Steuereinheit (10) umfasst, die Softwaremittel umfasst, die das Diagnoseverfahren des Fotovoltaiksystems (1) nach einem der vorhergehenden Ansprüche einsetzen.

10. Fotovoltaiksystem (1) nach dem vorhergehenden Anspruch, **dadurch gekennzeichnet, dass** der Sensor (4, 4') zum Messen einer elektrischen Größe jedes Fotovoltaik-Unterfeldes (2, 2') in einen Wechselrichter (5, 5') integriert ist, der jedem der Fotovoltaik-Unterfelder zugeordnet ist.

11. Fotovoltaiksystem (1) nach Anspruch 9 oder 10, **dadurch gekennzeichnet, dass** die zwei Fotovoltaik-Unterfelder auf zwei Flächen eines selben Daches angeordnet sind.

12. Datenaufzeichnungsträger, der von einem Rechner lesbar ist, auf dem ein Computerprogramm aufgezeichnet ist, umfassend Softwaremittel für den Einsatz der Schritte des Diagnoseverfahrens nach einem der Ansprüche 1 bis 8.

**Claims**

1. Diagnosis method for a photovoltaic system (1) comprising at least two photovoltaic subarrays (2, 2') comprising photovoltaic modules (3, 3'), the two photovoltaic subarrays (2, 2') having a different orientation and/or different tilt, and each photovoltaic subarray (2, 2') being associated with at least one sensor (4, 4') for measuring an electrical quantity that is characteristic of its operation, **characterized in that** it comprises the following steps:

   (E1)-measuring at least one electrical quantity by means of each sensor (4, 4') at multiple times over a period under consideration;
   (E2)-calculating reference values by transposing the measurements of an electrical quantity that are characteristic of the operation of a reference photovoltaic subarray, the transposition generating an estimate of the values of the electrical quantity which would be measured if said reference photovoltaic subarray had the same orientation and/or tilt as at least one other photovoltaic subarray of the photovoltaic system;
   (E3)-comparing the measurements of a characteristic electrical quantity that are associated with this at least one other photovoltaic subarray with the reference values over a chosen duration so as to deduce therefrom the presence or absence of a fault in the photovoltaic system over said duration.

2. Diagnosis method for a photovoltaic system (1) according to the preceding claim, **characterized in that** the step (E2) of calculating reference values comprises the implementation of calculation substeps via one, two, three or more than three models for transposing the measurements of the electrical quantity that is characteristic of the operation of said subarray, and **in that** these models, if two or more thereof are implemented, are suitable for clear or overcast weather conditions and/or different irradiance conditions.

3. Diagnosis method for a photovoltaic system (1) according to the preceding claim, **characterized in that** the step (E2) of calculating reference values comprises the implementation of the following substeps:

   - calculating (E21, E22, E23) multiple intermediate reference values by means of multiple models (M1, M2, M3) for transposing the measurements of the electrical quantity that is characteristic of the operation of said subarray;
   - selecting the model (E24) which makes it possible to obtain the reference values that are closest to the measurements of the at least one other photovoltaic subarray.

4. Diagnosis method for a photovoltaic system (1) according to Claim 2 or 3, **characterized in that** the step (E2) of calculating reference values comprises the implementation of some or all of the following substeps:

   (E21)-calculating first intermediate reference values by means of a first transposition model (M1), suitable for the case of an assumption of clear weather, and in particular comprising a calculation for correcting for the angle of incidence of the solar radiation;
   (E22)-calculating second intermediate reference values by means of a second transposition model (M2), suitable for the case of an assumption that the irradiance is dominated by the direct solar component, and in particular comprising a calculation for correcting for the angle of incidence of the solar radiation;
   (E23)-calculating third intermediate reference values by means of a third transposition model (M3), suitable for the case of an assumption of overcast weather with an isotropic diffusion of the solar radiation, without correction for the angle of incidence of the solar radiation.

5. Diagnosis method for a photovoltaic system (1) according to Claim 3 or 4, **characterized in that** the substep (E24) of selecting the model comprises the statistical analysis of distributions that are characteristic of the spread between each series of intermediate reference values that are deduced from the measurements of the reference photovoltaic subarray and the measurements of a characteristic electrical quantity that are associated with said at least one other photovoltaic subarray so as to select, as reference values, the series of intermediate reference values having the smaller spread.

6. Diagnosis method for a photovoltaic system (1) according to one of the preceding claims, **characterized in that** it comprises a statistical processing step making it possible to discard the isolated and remote measurements and/or reference values that probably correspond to measurement errors, by taking into account the standard deviation and/or the mean value.

7. Diagnosis method for a photovoltaic system (1) according to one of the preceding claims, **characterized in that** the step (E3) of comparing the electrical quantity measurements with the reference values comprises the comparison, according to a statistical analysis, of the differences between said electrical quantity measurements and the reference values, taking into account the standard deviation and/or the mean value.

8. Diagnosis method for a photovoltaic system (1) according to one of the preceding claims, **characterized in that** the measured electrical quantity is the power generated at a given instant in time, and/or the energy produced at a given instant in time from a predefined initial instant in time, and/or comprises the measurement of the voltage and/or the current at the terminals of the subarray.

9. Photovoltaic system (1), **characterized in that** it comprises at least two photovoltaic subarrays (2, 2') comprising photovoltaic modules (3, 3'), the two photovoltaic subarrays (2, 2') having a different orientation and/or different tilt, and each photovoltaic subarray (2, 2') being associated with at least one sensor (4, 4') for measuring an electrical quantity that is characteristic of its operation, **characterized in that** it comprises a management unit (10) that comprises software means which implement the diagnosis method for the photovoltaic system (1) according to one of the preceding claims.

10. Photovoltaic system (1) according to the preceding claim, **characterized in that** the sensor (4, 4') for measuring an electrical quantity of each photovoltaic subarray (2, 2') is incorporated within an inverter (5, 5') that is associated with each of the photovoltaic subarrays.

11. Photovoltaic system (1) according to Claim 9 or 10, **characterized in that** the two photovoltaic subarrays are positioned on two tiles of one and the same roof.

12. Data storage medium that can be read by a computer on which a computer program is stored comprising software means for implementing the steps of the diagnosis method according to one of Claims 1 to 8.

Fig.1

Fig.2

# Fig.3

E1 — Mesure d'au moins une grandeur électrique P1, P2 de deux sous-champs photovoltaïques

E2 — Calcul de P1ref par transposition

E21 — Transposition par un premier modèle M1

E22 — Transposition par un second modèle M2

E23 — Transposition par un troisième modèle M3

E24 — Choix du modèle et de la valeur de référence

E3 — Comparaison, détection de défaillance

## Fig.4

E1 — Mesure P2

E21

E22

Fig.5

E23

**M1**

Transposition sous
hypothèse
temps clair

**M2**

Transposition sous
hypothèse composante
directe

**M3**

Transposition sous
hypothèse
diffus isotrope

Correction angle
incidente

Correction angle
incidente

Choix du modèle permettant de s'approcher au mieux de la mesure P1

E24

P1$_{ref}$ calculée à partir de P2 par
transposition

Fig.6

μ = 2.6009% et σ = 15.463%

Fig.7

μ = 1.3822% et σ = 3.755%

Fig.8

Fig.9

## RÉFÉRENCES CITÉES DANS LA DESCRIPTION

**Documents brevets cités dans la description**

- DE 102012102932 A

- US 2010250018 A

**Littérature non-brevet citée dans la description**

- **RIGOLLIER C. ; BAUER O. ; WALD L.** On the clear sky model of the 4th European Solar Radiation Atlas with respect to the Heliosat method. *solar Energy,* 2000, vol. 68, 33-48